# EUROPEAN PATENT SPECIFICATION

(11) **EP 0 464 027 B1**
(45) Date of publication and mention of the grant of the patent: **30.05.2001**
(21) Application number: 90902082.8
(22) Date of filing: 20.12.1989
(51) Int. Cl.: F16L 55/00, F17D 5/04

(54) **FLEXIBLE DOUBLE-CONTAINMENT PIPING SYSTEM**
FLEXIBLES, DOPPELT GESICHERTES ROHRSYSTEM
SYSTEME DE CANALISATION SOUPLE A DOUBLE RETENUE

(30) Priority: 20.12.1988 US 286893; 22.09.1989 US 411385
(43) Date of publication of application: 08.01.1992
(60) Divisional application: 97120544.8
(73) Proprietor: Pisces by OPW, Inc., Cincinnati, Ohio 45240-5003 (US)
(72) Inventor: Osborne, Keith J., Arnold, Maryland 21076 (US)
(74) Representative: Gura, Henry Alan
(86) International application number: PCT/US89/05845
(87) International publication number: WO 90/07674

(56) References cited:
- WO-A-90/04157
- WO-A-90/07074
- US-A- 648 128
- US-A- 2 056 586
- US-A- 2 336 150
- US-A- 2 546 348
- US-A- 3 841 671
- US-A- 4 062 376
- US-A- 4 110 947
- US-A- 4 561 292
- US-A- 4 639 164
- US-A- 4 739 648
- US-A- 4 787 772
- US-A- 4 796 676
- US-A- 4 919 305
- US-A- 5 065 616
- US-A- 5 325 896
- US-A- 5 868 175

## Description

The present invention relates to an improved underground piping system for underground tanks used to store hydrocarbon fuels or the like.

### Background

Studies by the United States Environmental Protection Agency have found that approximately two-thirds of the leaks in underground storage tanks can be traced to failure of an underground piping system rather than to the tank itself. Specific locations include joints such as unions, elbows and couplings where two straight pieces of pipe are joined together, connections to underground equipment, and corroded steel pipes.

Also, structural failure in piping systems can occur when movements take place in tanks and/or piping systems due to high water tables or settling ground movement. This is particularly true in the case of rigid fiberglass piping systems which are subject to cracking or outright structural failure.

Piping systems having one pipe contained within another are known.

US-A-648128 describes a utility supply pipe for a building running through a buried outer pipe, so that it can be withdrawn or re-installed through the outer pipe without digging a new trench.

US-A-4062376 varies in that the concentric utility pipes are flexible and curved. Excavation is needed to expose the connection of the utility pipe to the main.

WO-A-90/04157 (with earlier priority date, but published after the present priority dates) describes using rigid pipes with flexible bent sections for conveying gasoline to a dispenser from an underground tank. Concentric outer pipes for containing leakage are telescopically slidable.

WO-A-90/07074 (priority date between the priority dates of the present case) conveys gasoline along a series of flexible inner pipes housed in buried flexible outer pipes for leak containment. Inlet, outlet and intermediate connections of the pipes are accessible via underground chambers.

The present invention aims to provide a novel double-walled flexible piping system, able to reduce inadvertent leakage of hazardous liquid such as hydrocarbon fuel into the environment from an underground storage tank piping system.

The invention is set out in Claim 1, with various preferred aspects in the sub-claims.

The pump coupling may comprise an inner coupling pipe in communication with the outlet port of the pump and an outer piping adapter concentric with the inner pipe. The dispenser coupling may comprise an inner coupling pipe in communication with the inlet port of the fluid dispenser and an outer piping adapter concentric with the inner pipe. The inlet end of the inner pipe is removably secured to the inner coupling pipe of the pump coupling, and the outlet end of the inner pipe is removably secured to the inner coupling pipe of the dispenser coupling.

The secondary pump-body coupling may comprise a first male coupling adapted to mate with the outer piping adapter of the pump coupling and a second male coupling adapted to mate with the dispenser end of the outer pipe.

The annular volume defined by the inner pipe, the outer pipe, the pump-body coupling, the secondary pump-body coupling, the dispenser coupling and the secondary dispenser coupling provides containment for the fluid in the event of leakage from the primary pipe.

A key advantage of the present invention is that the piping can be replaced without excavating or breaking ground at the installed tank site, merely by performing operations within a containment chamber, dispenser or manifold pan, and optionally a connection pan if any, each of which may be referred to as an access chamber.

An additional advantage is that piping is readily accessible from grade for structural testing without excavating or breaking ground at the installed tank site.

An advantage of certain embodiments of the present invention is that a simple underground piping system may be connected with only two coupling joints.

Alternative embodiments of the present invention involve the use of additional couplings, for example to allow the piping to form a "Y" joint. Means for containing fluid within a containment volume are provided.

It is a feature of the present invention that in the event of a leak of the piping, the leak is virtually totally contained within the annular space between the inner and outer pipes or in the pipe containment chamber and is not discharged to the surroundings.

An additional feature of a preferred embodiment of the present invention is that a sensor placed between the walls of the two concentric pipes provides a method of detecting any release from the primary pipe, e.g. causing an alarm to sound.

An additional feature of a preferred embodiment is that any leakage from the inner pipe into the annular space between the inner and outer pipes can be drained into a containment chamber, where it can be removed without contaminating the environment.

An additional feature of an alternative embodiment is that any leakage into the annular space between the inner and outer pipes can be removed by suction at the dispenser connection above ground, where it can be removed without contaminating the environment.

Another embodiment of the invention provides a collection sump, into which fluid from any containment is continually drained.

An embodiment of the invention which provides particularly advantageous assembly and disassembly involves cooperation between a bayonet-type quick-disconnect coupling for the inner piping and a bellows. The bellows retracts to provide access to the quick-disconnect fitting for replacement of the inner piping. When extended, the bellows is sealably connected with the outer piping coaxial with the primary piping, so as to provide an annular containment volume around the quick-disconnect coupling.

### Brief Description of Drawings

FIG. 1 is an elevational cross-section of an installed underground fuel storage tank provided'with a piping system in accordance with the present invention.

FIG. 2 is an elevational cross-section of a portion of the piping system of Fig. 1 showing in greater detail the connection of the flexible pipe with the pump body.

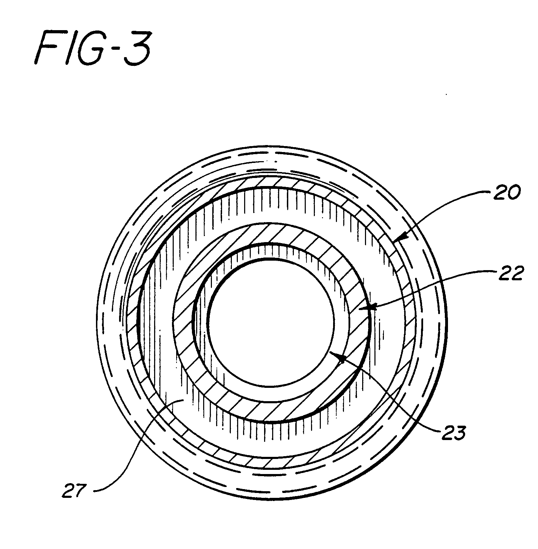

FIG. 3 is a cross-section taken along the line 3--3 of Fig. 2.

FIG. 4 is an elevational cross-section of a portion of a variant piping system, showing in greater detail the connection of the flexible pipe with the fuel dispenser.

FIG. 5 is a schematic elevational cross-section of the flexible piping run manifold connection to other underground storage tank systems.

FIGS. 6 and 7 are each elevational views in cross-section showing in greater detail certain elements depicted schematically in Fig. 5.

FIG. 8 is an elevational view in partial cross-section of one end of an alternative embodiment of the present invention, showing in detail the connection of the flexible pipe with the pump body, corresponding approximately to Fig. 2.

FIG. 9 is an elevational view in partial cross-section of the other end of the alternative embodiment shown in Fig. 8, showing in detail the connection of the flexible pipe with the dispenser.

FIG. 10 is a perspective view of the quick-disconnect coupling used in the embodiment illustrated in Figs. 8 and 9, disposed approximately as shown in Fig. 9, but in the disconnected condition.

FIG. 11 is an elevational view of an embodiment of the invention in which a connection chamber is employed between a tank and a dispenser.

FIG. 12 is a plan view of the embodiment of the invention employing a connection chamber as shown in Fig. 11, but wherein each underground tank is connected via a connection chamber to a pair of dispensers.

FIG. 13 is an elevational view showing in greater detail an embodiment of the invention employing a connection chamber, wherein the containment pipe drains into a containment chamber and a connection chamber which vent to the atmosphere.

FIG. 14 is an elevational view in the nature of Fig. 13 showing an alternative embodiment such as that shown in Figs. 8 and 9, in which the interstitial space between the product pipe and containment pipe contains a vacuum.

FIG. 15 is an elevational view in the nature of Figs. 13 and 14, wherein the interstitial space is vented to the tank through a pipe in the containment chamber, whereby vapor recovery is effected.

FIG. 16 is a plan view showing in greater detail the piping of manifold containment pans on a pair of dispenser islands.

FIG. 17 is an elevational view in the nature of Fig. 11 showing an alternative embodiment of the present invention, in which a containment chamber, a connection chamber, and a manifold pan are each connected by piping to a collection sump fed by gravity.

FIG. 18 is a plan view in the nature of Fig. 12 of the embodiment shown in Fig. 17.

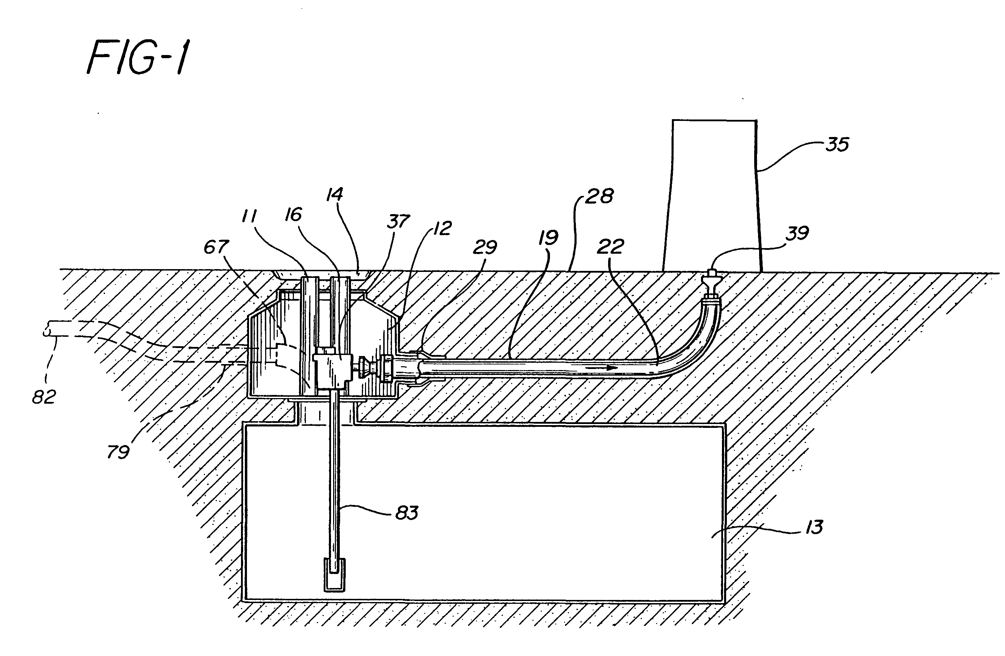

Fig. 1 shows a conventional underground fuel tank 13 with a single manway 14 at grade level 28, equipped with a conventional containment chamber 12, which provides access to the pump 37 and the underground piping 19,22 connected to it. The underground tank 13 is filled with fuel by opening the manway 14 and transferring fuel to tank 13 through the fill pipe 16.

A pump 37 is provided to pump fuel through input pipe 83 from the underground tank 13 through a primary (inner) pipe 22 to a fuel dispenser coupling 39 providing input to a fuel dispenser 35. The fuel dispenser 35 may be a conventional service station gas pump. In accordance with the present invention, a secondary (outer) pipe 19 jackets the primary pipe 22 and provides containment for any fuel that might leak out of primary pipe 22.

To enter the containment chamber 12, one removes the manhole cover 14, exposing the vapor recovery pipe 11 and the fill pipe 16, which can then be removed from grade level 28.

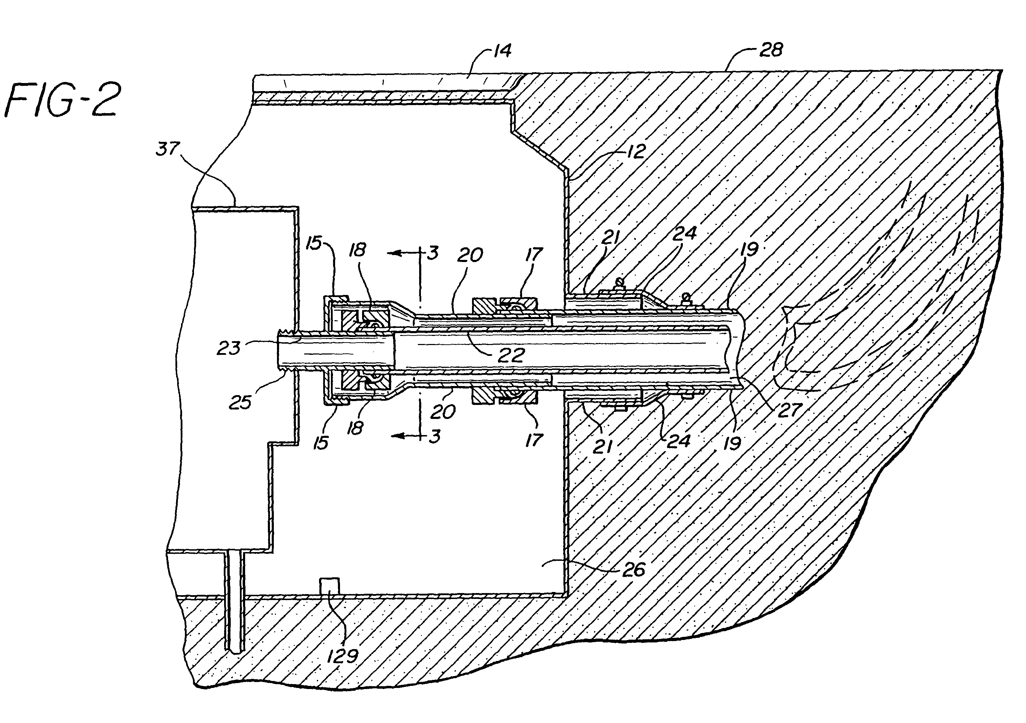

As shown in Fig. 2, the compression fittings 17, 18 for the secondary pipe 19 and the primary pipe 22 are now accessible from the containment chamber 12. The compression fitting 17 for the secondary pipe 19 is disconnected. The male-threaded coupling 20 is next unscrewed from the female-tapped piping adaptor 15, and the male coupling 20, is forced away from the pump body and adaptor, thereby exposing the compression fitting 18 connecting the inner pipe 22 with the adaptor 23. The compression fitting 18 can now be disconnected, thus disconnecting the primary pipe 22 and the secondary pipe 19 from the piping adaptor and the pump body 37. The other ends of the primary pipe 22 and secondary pipe 19 are similarly disconnected from the dispenser coupling 39 at or about grade level 28.

The inner primary pipe 22 can now be "fished" or pulled up and out from the outer secondary pipe 19 from grade level 28. The primary pipe 22 and the secondary pipe 19 are accessible at both ends, below grade at the interface with the containment chamber 12, and at or about grade level 28 at the fuel dispenser coupling 39. Since the pipes 19, 22 are flexible, the pipe may be shipped to the field site where the tank is installed and cut at the job site to the desired length.

The piping adaptor 23 is a forged or cast custom fitting comprising 51mm (two-inch) outside diameter inner pipe connected to the outlet pump body 37, below ground. The dispenser coupling 39 is a corresponding fitting connected to the dispenser inlet port, which conventionally extends from a shear valve. The flexible primary pipe 22, desirably of 51mm (two-inch) inner diameter, fits over the piping adaptor 23. The compression fitting 18 clamps and firmly secures the primary pipe 22 to the piping adaptor 23. The length of the inner pipe of the piping adaptor 23 is typically two pipe diameters. The compression fitting 18 may be substituted with a common hose clamp, strap or other fitting.

The male coupling 20 is a 102mm (four-inch) outside diameter steel pipe adapter with external threads. It screws at one threaded end 25 into the outer piping adapter, 15. The flexible secondary pipe 19 is desirably of 102 mm (four-inch) inside diameter hose piping. It slides over the free end of the male coupling 20. A compression fitting 17 clamps and firmly secures the secondary pipe 19 to the male coupling 20.

After installation of the flexible piping system, the outside secondary pipe 19 is rendered inflexible as it is buried in the ground. The outside pipe 19 serves as a guide for the primary pipe 22 which slides into or is retractable from it.

The piping adaptor 23 has a male thread 25, that screws into the pump body 37. (In some cases where the pump has a standard male connection, a standard pipe coupling may be necessary to connect the piping adaptor.) Once the piping adaptor 23 is screwed into the outlet port of the pump body 37, the piping adaptor 23 is fixed and is generally not removed.

A boot 24, is used to seal the entry of the secondary pipe 19, where it enters the containment chamber 12 by connecting to a sleeve 21 which is an integral part of the containment chamber 12.

If the primary inner pipe 22 leaks, the leakage is contained in the annular space 27 between the primary pipe 22 and secondary pipe 19, and will not escape into and flood the containment chamber 12. If a leak arises at the juncture of the pipe 22 and pump body 37, or at either of the two compression fittings 17 or 18, the presence of boot 24 ensures that the leak is contained in the piping containment chamber 12 and does not overflow into the surrounding soil. The boot 24 also prevents leakage from the fill pipe 16 from escaping from the containment chamber 12 into the soil.

The annular space 27 between the coaxial primary pipe 22 and secondary pipe 19 can be tested for leakage in the inner pipe 19 by locating one or more sensors in the annular space 27 between the pipes 22 and 19.

As shown in Fig. 1, a manifold connection 67 may optionally be provided to link with another storage tank (not shown). The link is created by an inner, primary pipe 82, which is surrounded coaxially by a secondary, containment pipe 79 extending from the manifold connection 67 via a coupling that is equivalent to that between the pump 37 and the pipes 19,22 that extend to the dispenser 35.

### Installation Method

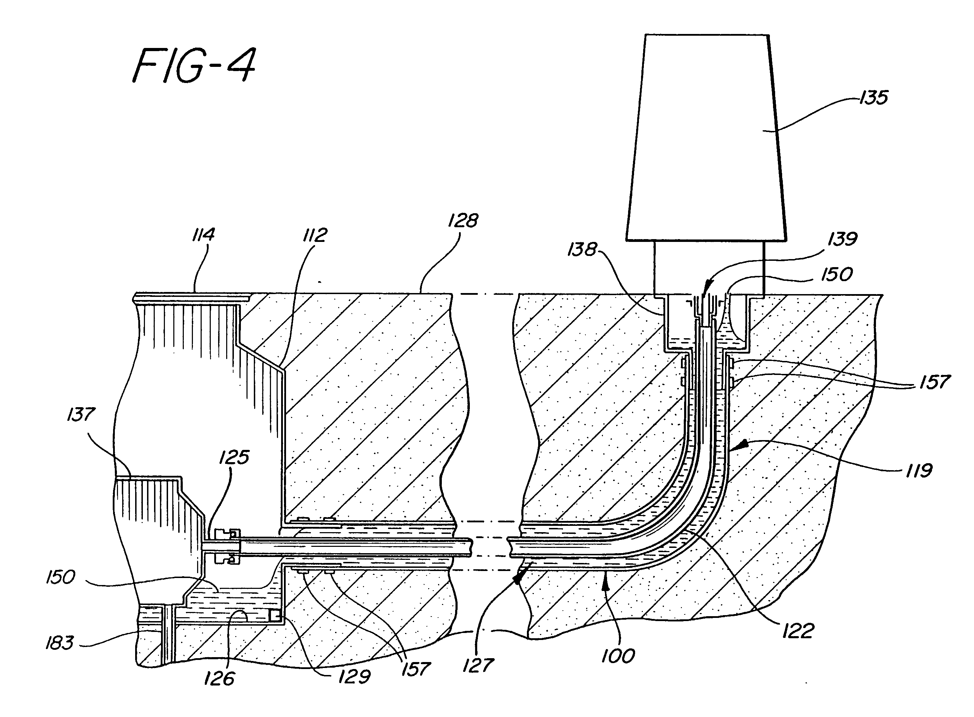

To install the system, first, the flexible outer secondary pipe 19 is installed below the ground, and then the flexible inner primary pipe 22 is inserted from the grade level 28 into the previously installed outer pipe 19. The below-ground ends of the two concentric pipes 19,22 are mechanically connected inside the containment chamber 12, which is made accessible by removal of manhole cover 14. The above-ground ends of the two concentric pipes 19,22 are mechanically connected inside a containment pan 138 below the fuel dispenser 135; see Fig. 4.

Accordingly there are only two mechanical fittings in the piping run--the connection at the containment chamber 112, and the connection at the containment pan, 138. Mechanical piping connections at which the underground pipe is likely to leak and which cannot be inspected visually from above ground are minimized.

This must be compared with conventional piping systems wherein many underground connections are employed, and which are buried and inaccessible. To reach these connections it is necessary to excavate much of the piping system in order to find a leak.

Furthermore, in the event of a leak at the connection between the underground piping 22 and the containment chamber 12, coupling 18 may be snapped open and the inner pipe 22 may be replaced with a new pipe underground without disturbing the concrete slab at grade level 28. So the underground piping is replaceable without going underground.

In Fig. 2, containment of the liquid, in the event of a leak in the primary pipe 22, will be held in the secondary pipe 19. Fig. 4 schematically illustrates a similar gas dispensing station with an alternate embodiment for securing the primary pipe 122 and secondary pipe 119 to the pump adapter 125 at one end and to the dispenser coupling 139 at the other end in an underground storage tank-dispenser piping system 100.

As shown in Fig. 4, fluid 150 leaking from the dispenser 135 will drip downward from grade level 128 into the containment pan 138 where it will pool at the bottom thereof and flow into the annular space 127 between the primary or product pipe 122 and the secondary or containment pipe 119, from which it will drain by gravity to the bottom 126 in the containment chamber 112.

A leak from the primary pipe 122 will similarly flow into the secondary pipe 119 and travel to the bottom 126 of the containment chamber 112.

The primary pipe 122 is connected to the bottom of the dispenser coupling 139 at the base of the dispenser 135. This coupling is substantially similar to the coupling at the other end of the double piping system in the containment chamber 112. The secondary or containment pipe 119 is connected directly to sleeves that protrude from the containment pan 138 at one end and the containment chamber 112 at the other end. The method of connection may be stainless steel straps or bands 157, applied in the field with a strap tightening and clamping tool. Alternatively, a compression fitting may be used. Access to the containment chamber 112 is provided through the manway 114.

In the embodiments illustrated in Fig. 2 and in Fig. 4, monitoring systems 129 are able to be installed at the leak collection locations 26, 126, and necessary repairs can be performed without an undesired release of fluid to the environment. In both the described embodiments, the primary pipe 22 or 122 can be replaced from above the ground.

The material of the primary pipe 22 or 122, and the secondary pipe 19 and 119 in the two aforesaid embodiments, is similar to the conventional "hose" construction, i.e. reinforced rubber or plastic material suitable for gasoline service.

A gasoline delivery hose while having a short lifespan above ground will exhibit a substantially longer life when used below ground in darkness (i.e. out of bright sunlight) and in a stationary condition, as illustrated-in Figs. 1, 2 & 4. In such use, there will be no degradation of pipe material due to exposure to sunlight and no deterioration of pipe material due to wear and tear which accompanies the frequent movement of conventional above-ground pipes. Under such circumstances, life expectancy of the underground piping system shown in Figs. 1,2 & 4 will exceed 10 years instead of the approximately 4 year average life expectancy of conventional above-ground pipe systems.

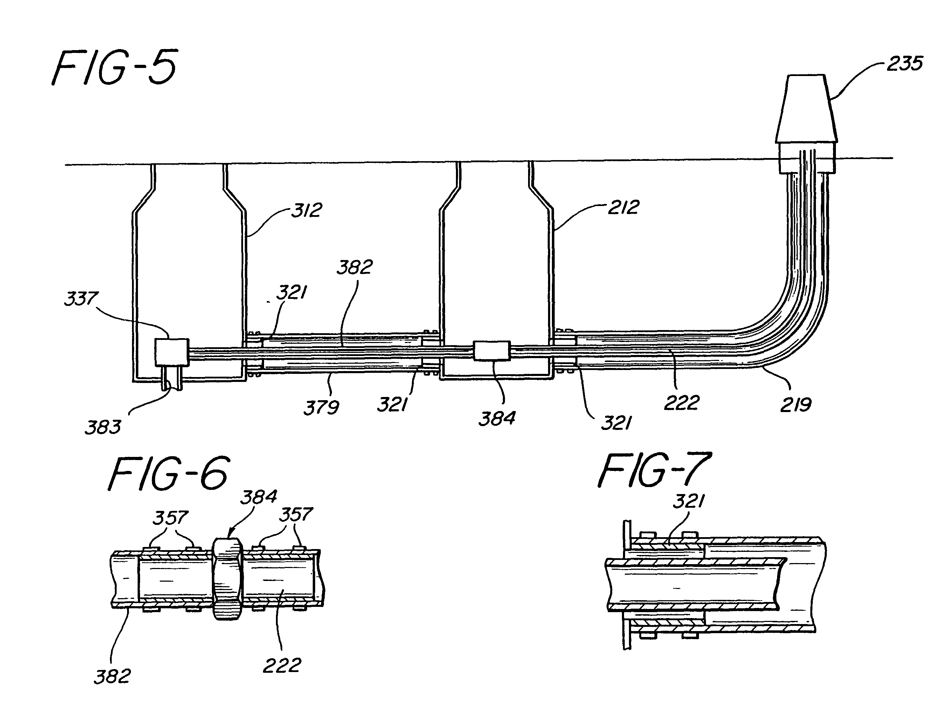

Furthermore, in the event of very long runs of pipe between the fuel storage tank and the fuel dispenser, a repeater containment chamber 212 may be placed in the pipe run. The piping containment chamber 212, the primary and secondary piping system 222 and 219, and the fuel dispenser 235 are schematically shown in Fig. 5. The use of repeater containment chambers will be necessary in cases where the length of the primary and secondary piping system delivered to the job site is less than the distance between the piping containment chamber 312 and the fuel dispenser 235, or if multiple fuel storage tanks are utilized and interconnectors in the piping become necessary.

As shown in Fig. 5, a pump 337 having an input pipe 383 extending downwardly towards the bottom of storage tank (not shown) is within an underground containment 312. A primary pipe 382 runs from containment 312 towards a dispenser 235. However, the pipe is not long enough to run all the way to dispenser 235 and instead terminates at an in-line coupling 384. The in-line coupling 384 communicates with the primary pipe segment 382 on the one side and with another primary pipe segment 222 on the other side, joining them to form a continuous passage for fluid. Clamps 357 secure pipes 382 and 222 to the coupling 384. Any leakage from either of the joints between the in-line coupling and pipe segments 382 or 222 is contained within containment chamber 212.

If pipe segment 382 should leak and need to be replaced, it can be accomplished without having to replace the entire piping between the pump 337 and the dispenser 235, and correspondingly so for pipe segment 222.

### Bellows Embodiment

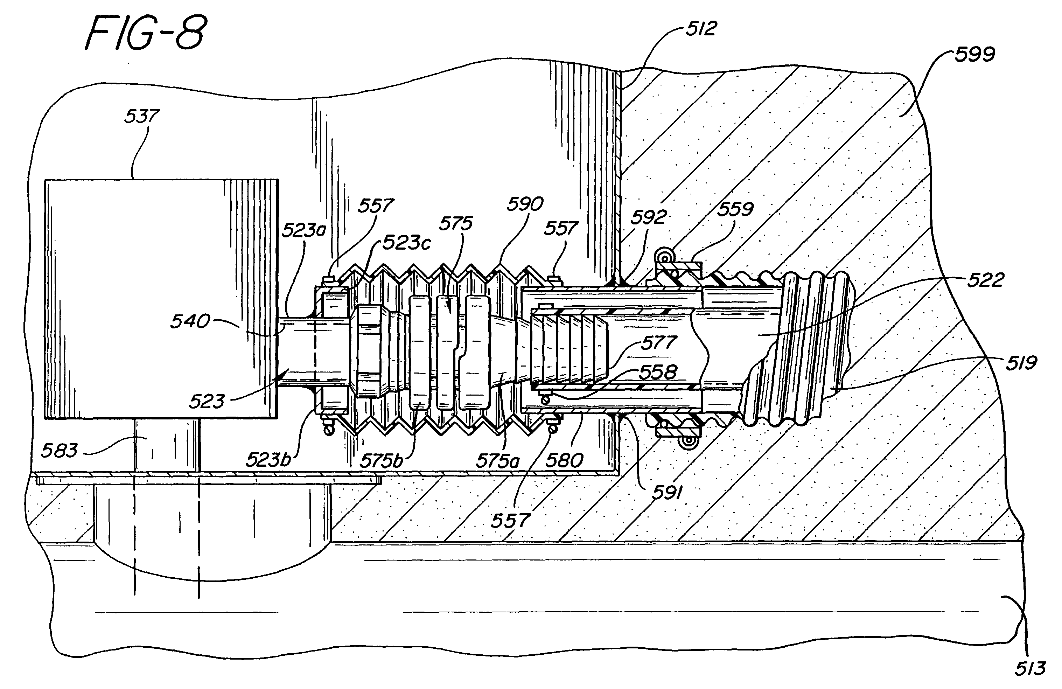

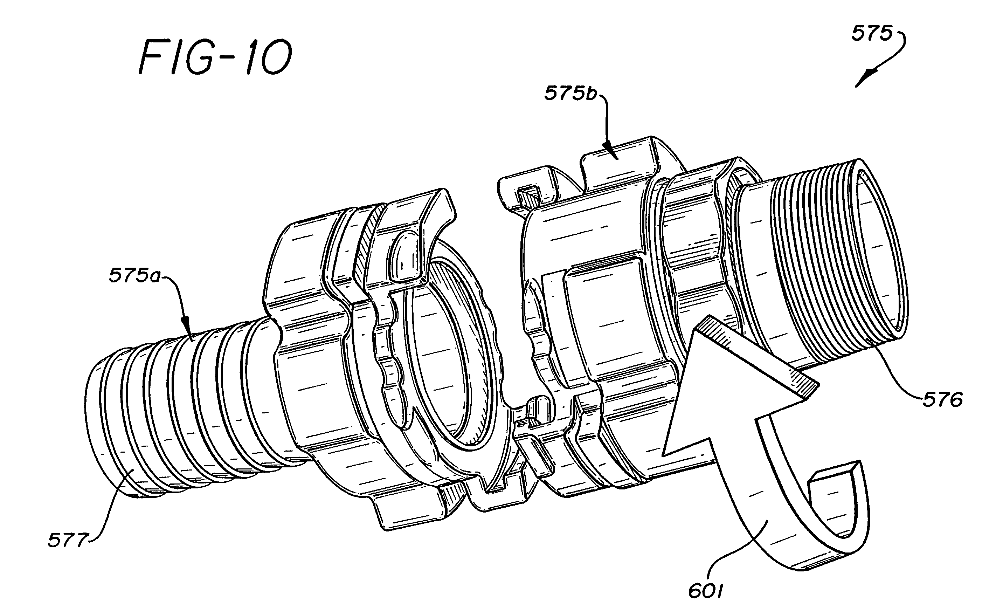

Figs. 8, 9, 14 and 16 illustrate an alternative embodiment of the invention which provides particularly advantageous assembly and disassembly. In this embodiment, the primary piping 522 is connected to a stationary element such as a pump 537 by a bayonet-type quick-disconnect fitting 575 shown in greater detail in Fig. 10. The secondary piping 519 is secured to the stationary element such as pump 537 via a bellows 590, e.g. of polypropylene or other plastic or of metal, held in place by a pair of bellows clamps 557. When either of the clamps 557 is loosened, bellows 590 can be retracted to provide access to the quick-disconnect fitting 575.

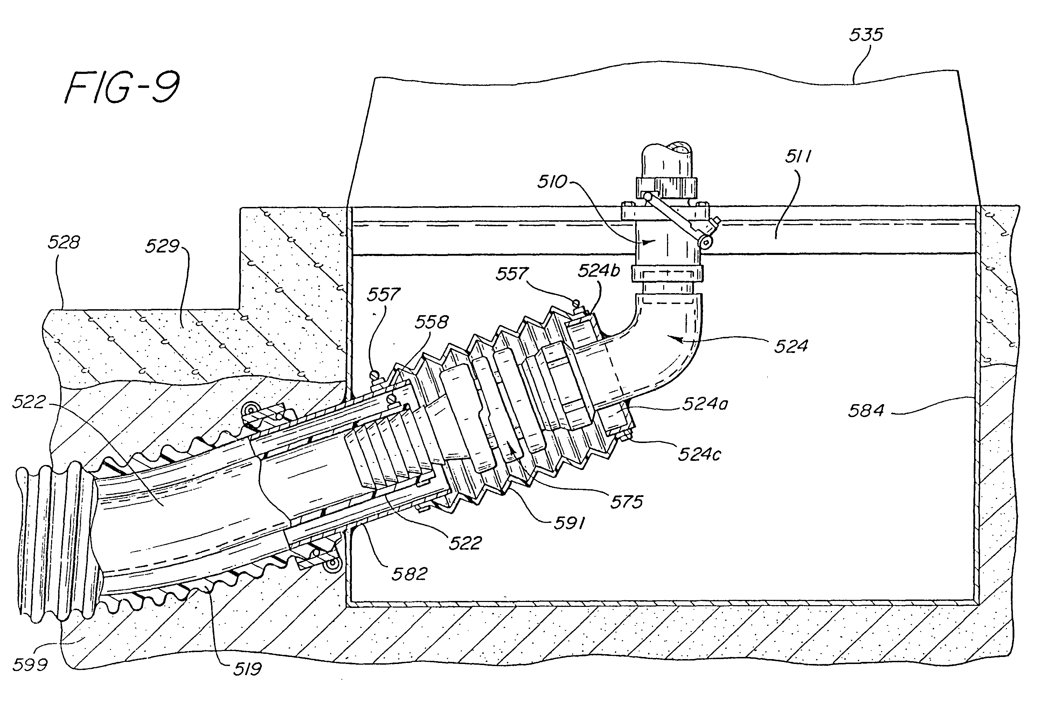

As shown in Fig. 9, the other end of the primary piping 522 may be coupled to the fluid dispenser 535 via a quick-disconnect fitting 575. The base of fitting .575 is secured to an elbow adaptor 524, which communicates with a conventional gasoline dispenser shear valve 510 mounted on angle bracket 511.

As shown in Fig. 10, the quick-disconnect fitting 575 comprises a nozzle section 575a and a base section 575b. The base section 575b desirably has a threaded neck 576 which mates with an adaptor 523 communicating with pump 537. The nozzle section 575a desirably has a male portion 577 adapted to be inserted into the primary piping 522 and which may be secured therein by a clamp 558. The sections 575a and 575b are adapted to mate with each other in bayonet fashion by rotation in the direction illustrated by arrow 601. They may be quickly disconnected by counter-rotation, freeing sections 575a and 575b to be separated.

### Manifold System

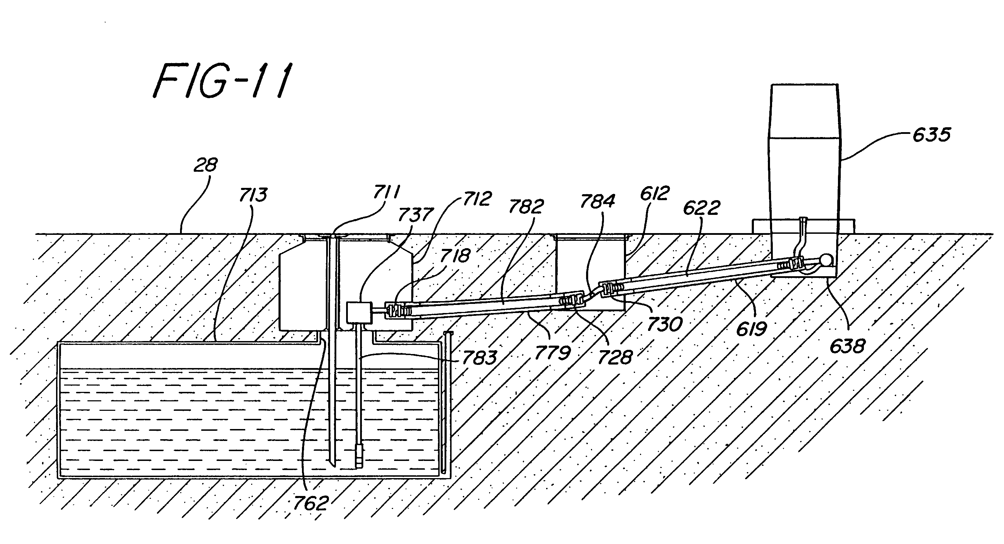

Figs. 11, 12 and 16 illustrate a refinement of the system shown generally in Fig. 5. This is useful for a service station having a plurality of concrete islands 785 on each of which are mounted several sets of dispensers 635.

In this embodiment, a tank 713, desirably of double-wall construction, has a containment chamber 712 atop its manway 762, through which a fill pipe 711 and pump input pipe 783 extend. The pump 737 is connected to a primary pipe segment 782 to which it communicates via coupling means 718, which may be of any of the types previously described. A secondary containment pipe segment 779 surrounds the primary pipe segment 782. The pipe segments 779 and 782 extend to a connection chamber 612. Within the chamber are coupling means 784, which provide a passageway for the primary pipe segment 782 to communicate with a primary pipe segment 622 extending from the connection chamber 612 to a manifold pan 638 below a set of dispensers 635. Surrounding primary pipe segment 622 is secondary pipe segment 619, which also extends to the manifold pan 638.

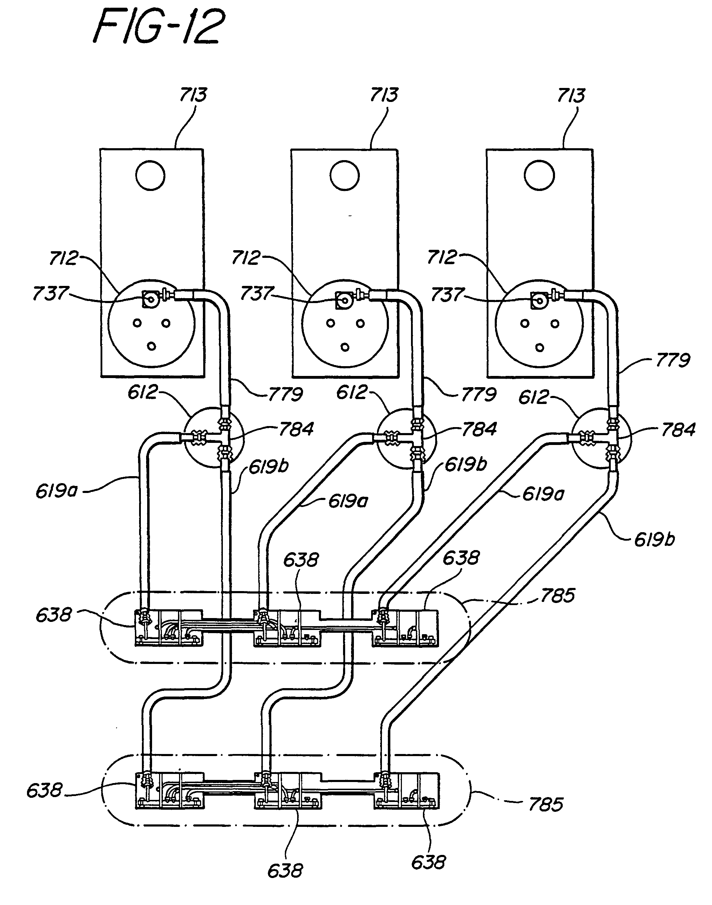

As shown in Fig. 12, the coupling means 784 may comprise a T-fitting, whereby pipe segments 619a and 619b extend respectively to manifold pans 638, which are conventionally installed below concrete islands 785.

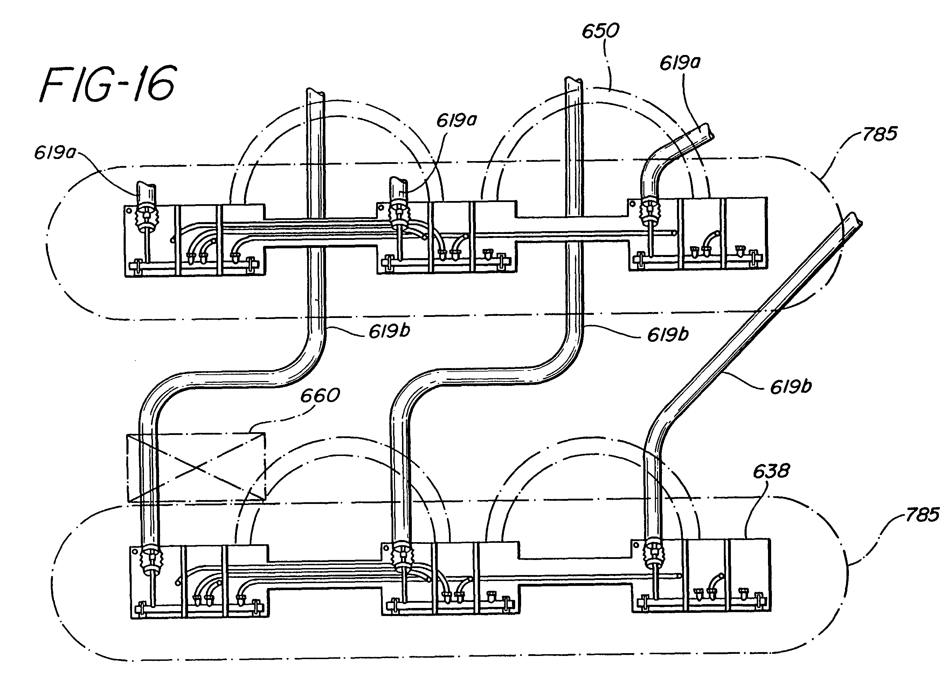

Fig. 16 shows a portion of the system of Fig. 12 in greater detail. It also shows alternate pan location 660 and alternate routing for pan interconnections 650 that may be adopted if desired.

As shown in Fig. 11, the secondary pipe segment 779 slopes upwardly from the pump connection 718 to the connection chamber 612, and the secondary pipe segment 619 similarly slopes upwardly from connection chamber 612 to manifold pan 638. Within the connection chamber 612, the coupling 784 provides for the upper terminus 728 of pipe segment 779 to be lower than the lower terminus 730 of the pipe segment 619, whereby any leakage into the secondary piping will be drained therefrom.

As shown in greatest detail in Fig. 16, a manifold containment pan 638 is desirably located under each set of product dispensers. These provide the means to interconnect each product dispenser on the island 785. Adaptor plates (not shown) are used to mount the product dispensers onto the containment pans 638. A large variety of product dispensers are available and in use, and no standardization exists for the dimensions and configuration of mountings on the island. To achieve adequate room for field service requirements, a suitable adaptor plate is used for mounting each type of dispenser onto the island.

Connections between pans 638 can be made through the canopy footings in the case of new installations, or by routing in "U" shaped configurations 650 when converting existing installations. Alternatively, manifolded pans can be located alongside the island 785 as at location 660, with gasketed covers to keep out rainwater.

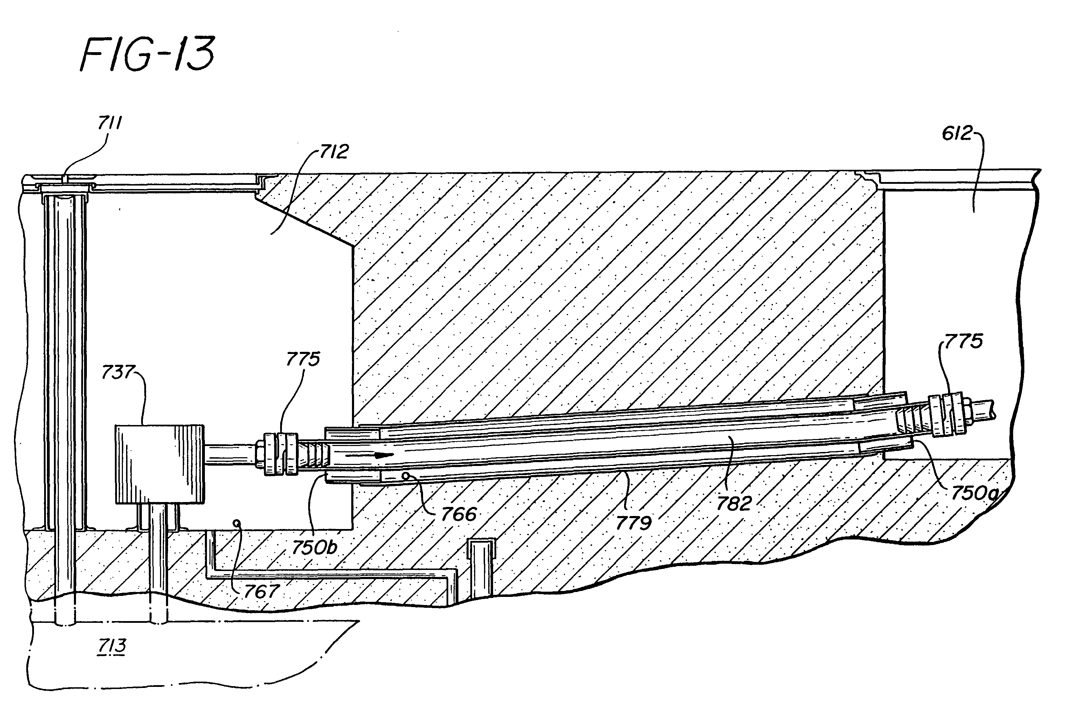

Fig. 13 shows one embodiment of the system shown in Figs. 11 and 12, in which the annular space between containment pipe segment 779 and product pipe segment 782 communicates with the atmosphere in containment chamber 712 and connection chamber 612. In this embodiment, quick-disconnect couplings 775 of the type previously described are used without bellows. Opening 750a allows leaked fluid that may be filling up the containment pipe segment 779 to drain into the connection chamber 612, and opening 750b allows such fluid to drain downwardly into the containment chamber 712.

Leakage may be monitored by monitors 766, 767 sensitive to liquid and connected to an alarm (not shown) or control of the product delivery pump.

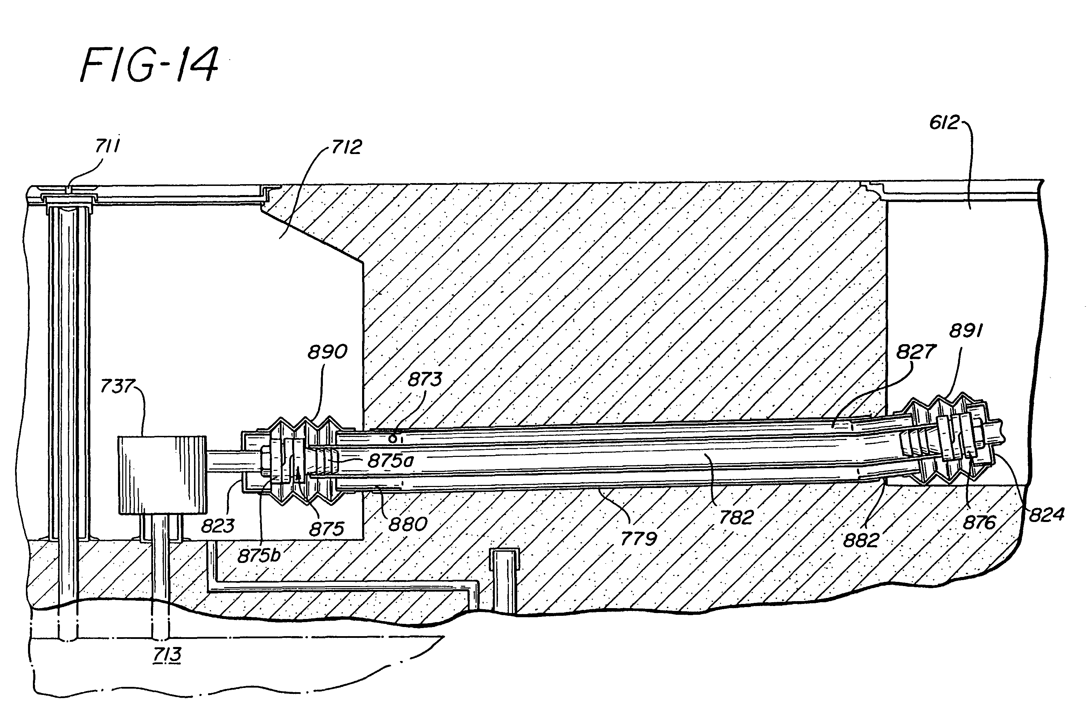

Fig. 14 shows an alternative embodiment, wherein the interstitial space 827 between the product pipe segment 782 and the containment pipe segment 779 is maintained at a partial vacuum. A release of fluid will result in a loss of the vacuum in the interstitial space 827. A vacuum switch 873 will thereupon cause an alarm to sound and/or shut down the product delivery pump.

Bellows 890, as generally described previously, surround the quick-disconnect coupling comprised of elements 875a and 875b, within the containment chamber 712. Within the connection chamber 612, the corresponding coupling 876 is surrounded by bellows 891. Each bellows communicates respectively with an adaptor fitting 823 or 824 in the manner previously described. When the piping is installed, a vacuum is applied to the interstitial space 827 by a conventional vacuum pump, and the containment pipe segment 779 is thereupon sealed.

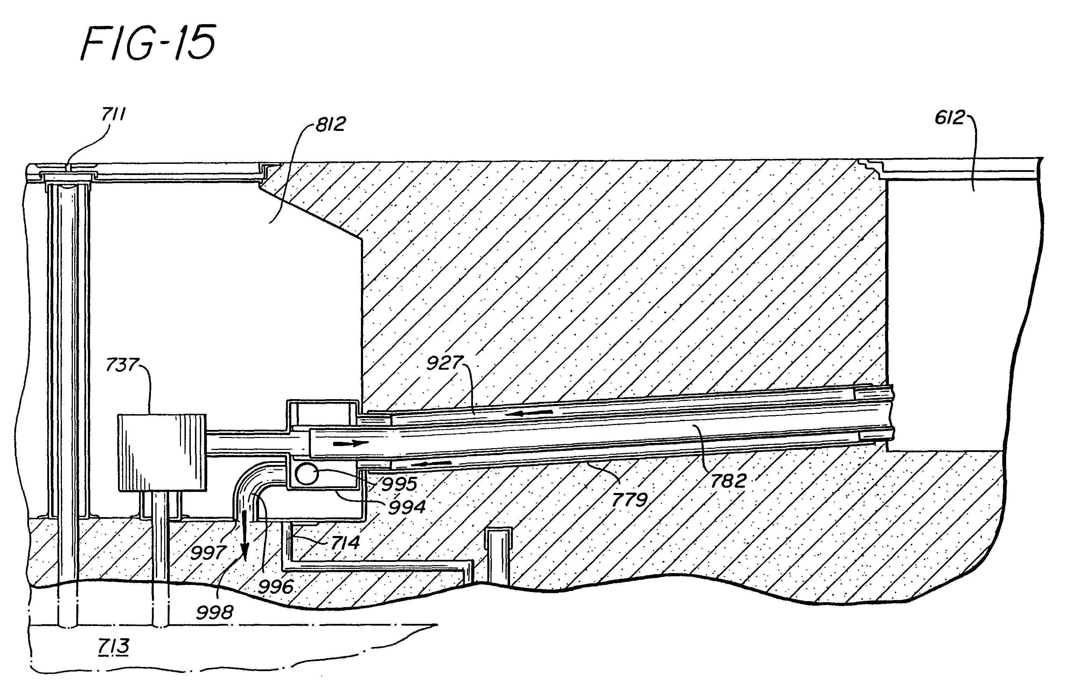

In Fig. 15, an embodiment is shown wherein means are provided to vent vapor down from the containment chamber 812 into the tank 713. Vapors given off by gasoline, while being dispensed, are sucked back into the bulk storage tank 713 through the interstitial space 927, either passively by virtue of the displacement caused in the tank by dispensing the gasoline, or by forced suction.

A coupling 994 is provided which communicates with the interstitial space 927. In the wall of coupling 994 is an orifice 995 through which recovered vapor or leaked fluid is led into a double-elbow 996, leading to an orifice 997 leading from the containment chamber 812 into manway 714 towards the tank 713, in the direction indicated by arrow 998.

### Collection Sump

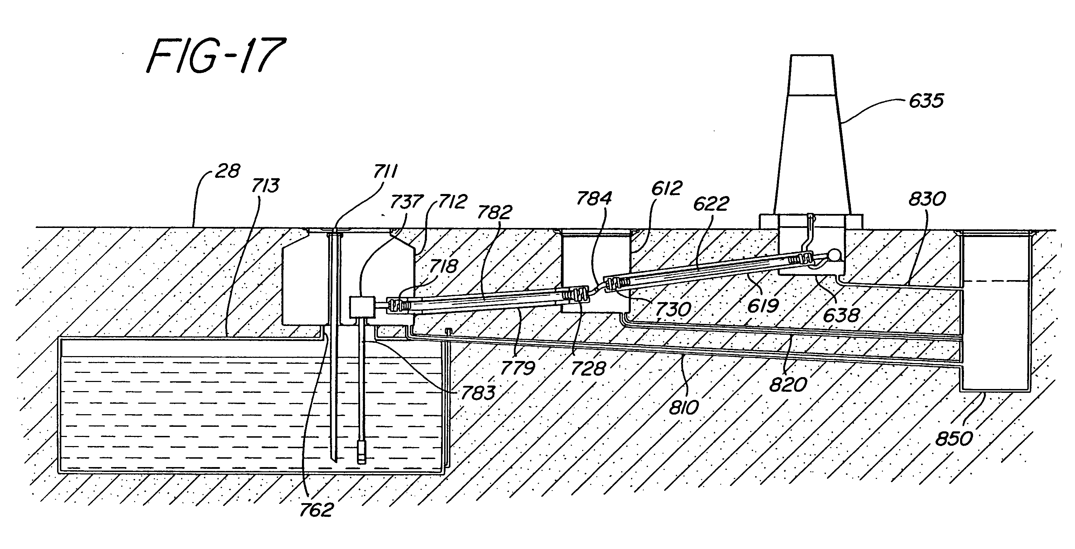

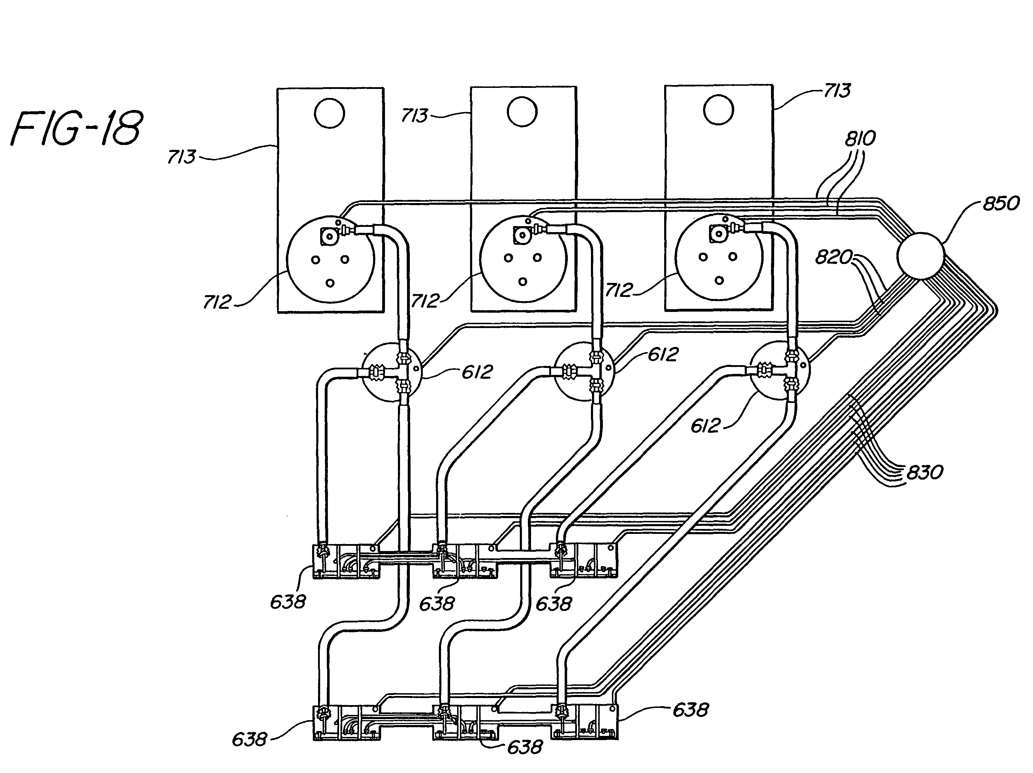

Figs. 17 and 18 illustrate an embodiment of the system shown in Figs. 11 and 12, wherein a drain line 810 extends from each containment chamber 712 angled downwardly to a collection sump 850. This provides a single location from which to remove product or water from the entire system. The collection sump 850 is connected to the containment areas 712, 612, and 638 with smaller diameter double containment, biaxial, flexible piping.

Thus, from each connection chamber 612, a drain line 820 extends angled downwardly to the sump 850. And similarly, from each manifold pan 638, a drain line 830 extends to the collection sump 850. The existence of the drain lines and sump permits each of the chambers and pans to be kept free from accumulating fluid, so that any overflow or leakage in the system can be collected at the sump.

## Claims

1. An underground piping arrangement for conveying fluid from an outlet port of a pump connected to an underground storage tank (13) to an inlet port of a fluid dispenser (35), comprising
(a) an inner fluid supply pipe (22) of flexible material having inlet and outlet ends;
(b) an inlet coupling and a dispenser coupling for releasably connecting the inlet end of the inner pipe (22) to said outlet port and the outlet end of the inner pipe (22) to said inlet port respectively, the inlet and dispenser couplings being accessible from above ground for coupling and release, the access to the inlet coupling being via an underground access. chamber (12) and the access to the dispenser coupling being at or about grade level or via a dispenser containment pan (138);
(c) an underground outer pipe (19) of flexible material which surrounds the inner pipe (22) to define a containment space (27) around the inner pipe (22) and has respective end connections corresponding to the inlet and outlet ends of the inner pipe (22), the inlet end connection of the outer pipe (19) being to said underground access chamber (12), or being to an outer piping adapter of the inlet coupling, in the underground access chamber (12), and the outlet end connection of the outer pipe (19) being to a said dispenser containment pan (138), or being to an outer piping adapter of the dispenser coupling, such that any leakage of fluid into said containment space (27) between the inner and outer pipes (22,19) is retained within said containment space (27) or is led thereby to a containment for such leaked fluid.

2. An underground piping arrangement according to claim 1 in which said containment is said underground access chamber, connected to the containment space (27) such that any fluid leaking into the containment space (27) between the inner and outer pipes (22,19) can drain into the underground access chamber.

3. An underground piping arrangement according to claim 1 comprising a collection sump connected to the containment chamber so that fluid can drain from the containment chamber to the collection sump.

4. An underground piping arrangement according to claim 1 wherein the containment space (927) between the inner and outer pipes is in fluid communication with the underground storage tank (713) so that vapours given off at the dispenser end of the piping arrangement can be drawn back into the storage tank through the containment space, optionally by forced suction.

5. An underground piping arrangement according to claim 1, wherein said inlet end connection of the outer pipe (119) is to a sleeve protruding from the underground access chamber (112) at an opening in its wall, so that the containment space (127) between said pipes is in fluid communication with the interior of the underground access chamber (112), and having a said dispenser containment pan (138) below the fluid dispenser, access to the dispenser coupling of the inner pipe (122) being provided in the containment pan (138) and wherein said outlet end connection of the outer pipe (119) is to a sleeve protruding from the containment pan (138) at an opening in its wall, so that the containment space (127) is in fluid communication with the interior of the containment pan (138).

6. An underground piping arrangement according to any one of the preceding claims, having a sensor (29) in the containment space (27) between the inner and outer pipes to detect fluid in the containment space (27).

7. An underground piping arrangement according to claim 1, having suction means for applying suction at the dispenser end of the containment space between the inner and outer pipes (22,19) to suck fluid out of the containment space (27).

8. An underground piping arrangement according to claim 1 in which each of said inner and outer pipes (222,219) is sub-divided into sections which are joined in series at an intermediate underground connection chamber (212) which provides access to a releasable coupling (384) between the respective sections (382,222) of the inner pipe, and has fluid-tight end connections for the corresponding sections (379,219) of outer pipe.

9. An underground piping arrangement according to claim 1 wherein the inner pipe couplings are bayonet-type quick-disconnect couplings (575;775;875)

10. An underground piping arrangement according to claim 9 wherein the inner pipe couplings are surrounded by retractable bellows (591;890) which connect in a fluid-tight manner relative to the outer pipe, the bellows when retracted allowing access to the couplings (575;875) and when extended defining a sealed annular containment volume around the couplings.

11. An underground piping arrangement according to claim 10 having means for applying a partial vacuum to the containment space (827) between the inner and outer pipes (782,779) and a sensor for detecting a loss of vacuum in said containment space (827).

## Patentansprüche

1. Unterirdische Rohrleitungsanordnung zur Beförderung von Fluid von einer Auslassöffnung einer Pumpe, die an einen unterirdischen Speichertank (13) angeschlossen ist, zu einer Einlassöffnung einer Fluidabgabeeinrichtung (35), umfassend
(a) ein Fluidzufuhr-Innenrohr (22) aus flexiblem Material mit einem Einlass- und einem Auslassende;
(b) eine Einlasskupplung und eine Abgabeeinrichtungskupplung, um das Einlassende des Innenrohres (22) lösbar mit der Auslassöffnung bzw. das Auslassende des Innenrohres (22) mit der Einlassöffnung zu verbinden, wobei die Einlass- und die Abgabeeinrichtungskupplung oberirdisch zum Koppeln und Lösen zugänglich sind, wobei der Zugang zur Einlasskupplung über eine unterirdische Zugangskammer (12) erfolgt und der Zugang zur Abgabeeinrichtungskupplung auf oder um Bodenniveau oder über eine Abgabeeinrichtungseinschließungspfanne (138) erfolgt;
(c) ein unterirdisches Außenrohr (19) aus flexiblem Material, das das Innenrohr (22) umgibt, wodurch ein Einschließungsraum (27) um das Innenrohr (22) definiert wird, und das jeweilige Endverbindungen aufweist, die mit dem Einlass- und dem Auslassende des Innenrohres (22) korrespondieren, wobei die Einlassendenverbindung des Außenrohres (19) zur unterirdischen Zugangskammer (12) erfolgt oder zu einem äußeren Rohrleitungsadapter der Einlasskupplung erfolgt, und die Auslassendenverbindung des Außenrohres (19) zur Abgabeeinrichtungseinschließungspfanne (138) erfolgt oder zu einem äußeren Rohrleitungsadapter der Abgabeeinrichtungskupplung erfolgt, so dass jegliches Austreten von Fluid in den Einschließungsraum (27) zwischen dem Innen- und dem Außenrohr (22, 19) innerhalb des Einschließungsraums (27) zurückgehalten wird oder dadurch zu einem Behältnis für solches ausgetretenes Fluid geleitet wird.

2. Unterirdische Rohrleitungsanordnung nach Anspruch 1, bei der das Behältnis die unterirdische Zugangskammer ist, die so an den Einschließungsraum (27) angeschlossen ist, dass jegliches Fluid, das in den Einschließungsraum (27) zwischen dem Innen- und dem Außenrohr (22, 19) austritt, in die unterirdische Zugangskammer abfließen kann.

3. Unterirdische Rohrleitungsanordnung nach Anspruch 1, umfassend einen Sammelsumpf, der mit der Einschließungskammer verbunden ist, so dass Fluid aus der Einschließungskammer zum Sammelsumpf abfließen kann.

4. Unterirdische Rohrleitungsanordnung nach Anspruch 1, worin sich der Einschließungsraum (927) zwischen dem Innen- und dem Außenrohr in Fluidkommunikation mit dem unterirdischen Speichertank (713) befindet, so dass Dämpfe, die am Abgabeeinrichtungsende der Rohrleitungsanordnung abgegeben werden, durch den Einschließungsraum in den Speichertank zurückgesaugt werden können, gegebenenfalls durch zwangsweises Ansaugen.

5. Unterirdische Rohrleitungsanordnung nach Anspruch 1, worin die Einlassendenverbindung des Außenrohres (119) zu einer Muffe erfolgt, die an einer Öffnung in der Wand der unterirdischen Zugangskammer (112) aus ihr ragt, so dass sich der Einschließungsraum (127) zwischen den Rohren in Fluidkommunikation mit dem Inneren der unterirdischen Zugangskammer (112) befindet, und bei der sich eine solche Abgabeeinrichtungseinschließungspfanne (138) unterhalb der Fluidabgabeeinrichtung befindet, wobei für Zugang zur Abgabeeinrichtungskupplung des Innenrohres (122) in der Einschließungspfanne (138) gesorgt wird, und worin die Auslassendenverbindung des Außenrohres (119) zu einer Muffe erfolgt, die an einer Öffnung in der Wand der Einschließungspfanne (138) aus ihr ragt, so dass sich der Einschließungsraum (127) in Fluidkommunikation mit dem Inneren der Einschließungspfanne (138) befindet.

6. Unterirdische Rohrleitungsanordnung nach einem der vorangegangenen Ansprüche, die einen Sensor (29) im Einschließungsraum (27) zwischen dem Innen- und dem Außenrohr aufweist, um Fluid im Einschließungsraum (27) zu detektieren.

7. Unterirdische Rohrleitungsanordnung nach Anspruch 1, die Saugmittel zum Ausüben von Saugwirkung am Abgabeeinrichtungsende des Einschließungsraums zwischen dem Innen- und dem Außenrohr (22, 19) aufweist, um Fluid aus dem Einschließungsraum (27) herauszusaugen.

8. Unterirdische Rohrleitungsanordnung nach Anspruch 1, bei der sowohl das Innen- als auch das Außenrohr (222, 219) in Abschnitte unterteilt ist, die an einer unterirdischen Zwischenverbindungskammer (212) in Serie aneinandergefügt sind, die Zugang zu einer lösbaren Kupplung (384) zwischen den jeweiligen Abschnitten (382, 222) des Innenrohres bietet, und die fluiddichte Endanschlüsse für die entsprechenden Außenrohr-Abschnitte (379, 219) aufweist.

9. Unterirdische Rohrleitungsanordnung nach Anspruch 1, worin die Innenrohr-Kupplungen Schnelllöse-Bajonettkupplungen (575; 775; 875) sind.

10. Unterirdische Rohrleitungsanordnung nach Anspruch 9, worin die Innenrohr-Kupplungen von einziehbaren Faltenbälgen (591; 890) umgeben sind, die fluiddicht in Bezug auf das Außenrohr anschließen, wobei die Bälge im eingezogenen Zustand Zugang zu den Kupplungen (575; 875) ermöglichen und im ausgestreckten Zustand ein abgedichtetes ringförmiges Behältnis um die Kupplungen definieren.

11. Unterirdische Rohrleitungsanordnung nach Anspruch 10, die Mittel zum Anlegen eines partiellen Vakuums an den Einschließungsraum (827) zwischen dem Innen- und dem Außenrohr (782, 779) sowie einen Sensor zum Detektieren eines Vakuumverlusts im Einschließungsraum (827) aufweist.

## Revendications

1. Une disposition de canalisation souterraine pour le transport d'un fluide depuis l'orifice de sortie d'une pompe reliée à un réservoir de stockage souterrain (13) jusqu'à l'orifice d'entrée d'un distributeur de fluide (35), comprenant
(a) un tuyau interne d'alimentation de fluide (22) en matière souple, présentant des extrémités d'entrée et de sortie ;
(b) un couplage d'entrée et un couplage de distributeur pour relier de manière libérable, respectivement l'extrémité d'entrée du tuyau interne (22) audit orifice de sortie et l'extrémité de sortie du tuyau interne (22) audit orifice d'entrée, les couplages d'entrée et de distributeur étant accessibles depuis le sol pour leur couplage et leur libération, l'accès au couplage d'entrée se faisant par l'intermédiaire d'une chambre d'accès souterraine (12) et l'accès au couplage de distributeur se faisant au niveau ou près du niveau du sol ou par l'intermédiaire d'un bac de confinement (138) du distributeur ;
(c) un tuyau externe souterrain (19) en matière souple qui entoure le tuyau interne (22) pour définir un espace de confinement (27) autour du tuyau interne (22) et qui présente des liaisons d'extrémité respectives correspondant aux extrémités d'entrée et de sortie du tuyau interne (22), la liaison d'extrémité d'entrée du tuyau externe (19) se faisant à ladite chambre d'accès souterraine (12), ou se faisant à un adaptateur de canalisation externe du couplage d'entrée dans la chambre d'accès souterraine (12), et la liaison d'extrémité de sortie du tuyau externe (19) se faisant audit bac de confinement (138) du distributeur, ou se faisant à un adaptateur de canalisation externe du couplage de distributeur de sorte que toute fuite de fluide dans l'espace de confinement (27) entre les tuyaux interne et externe (22, 19) est retenue à l'intérieur dudit espace de confinement (27) ou est conduit par celui-ci vers un confinement pour un tel fluide ayant fui.

2. Une disposition de canalisation souterraine selon la revendication 1, dans laquelle ledit confinement est constitué par ladite chambre d'accès souterraine, relié à l'espace de confinement (27) de telle manière que toute fuite de fluide dans l'espace de confinement (27) entre les tuyaux interne et externe (22, 19) puisse s'évacuer dans la chambre d'accès souterraine.

3. Une disposition de canalisation souterraine selon la revendication 1 comprenant un bassin de réception relié à la chambre de confinement de telle manière que du fluide puisse s'évacuer de la chambre de confinement jusqu'au bassin de réception.

4. Une disposition de canalisation souterraine selon la revendication 1, dans laquelle l'espace de confinement (927) entre les tuyaux interne et externe est en communication de fluide avec le réservoir de stockage souterrain (713) de telle manière que des vapeurs dégagées au niveau de l'extrémité du distributeur de la disposition de canalisation puissent être ramenées dans le réservoir de stockage par l'intermédiaire de l'espace de confinement, éventuellement par aspiration forcée.

5. Une disposition de canalisation souterraine selon la revendication 1, dans laquelle ladite liaison d'extrémité d'entrée du tuyau externe (119) est pour un manchon faisant saillie de la chambre d'accès souterraine (112) au niveau d'une ouverture ménagée dans sa paroi, de sorte que l'espace de confinement (127) entre lesdits tuyaux est en communication de fluide avec l'intérieur de la chambre d'accès souterraine (112), et présentant un bac de confinement (138) du distributeur en dessous du distributeur de fluide, l'accès au couplage de distributeur du tuyau interne (122) étant prévu dans le bac de confinement (138) et dans lequel ladite liaison d'extrémité de sortie du tuyau externe (119) est pour un manchon faisant saillie du bac de confinement (138) au niveau d'une ouverture ménagée dans sa paroi, de sorte que l'espace de confinement (127) est en communication de fluide avec l'intérieur du bac de confinement (138).

6. Une disposition de canalisation souterraine selon l'une quelconque des revendications précédentes, présentant un capteur (29) prévu dans l'espace de confinement (27) entre les tuyaux interne et externe pour détecter du fluide dans l'espace de confinement (27).

7. Une dispositif de canalisation souterraine selon la revendication 1, présentant des moyens d'aspiration pour appliquer une aspiration au niveau de l'extrémité de distributeur de l'espace de confinement entre les tuyaux interne et externe (22, 19) pour aspirer du fluide hors de l'espace de confinement (27).

8. Une disposition de canalisation souterraine selon la revendication 1, dans laquelle chacun desdits tuyaux interne et externe (222, 219) est subdivisé en sections qui sont réunies en série au niveau d'une chambre de liaison souterraine intermédiaire (212) qui assure un accès à un couplage libérable (384) entre les sections respectives (382, 222) du tuyau interne, et présente des liaisons d'extrémité étanches aux fluides pour les sections correspondantes (379, 219) du tuyau externe.

9. Une disposition de canalisation souterraine selon la revendication 1, dans laquelle les couplages du tuyau interne sont des couplages à déconnexion rapide du type à baïonnette (575 ; 775 ; 875).

10. Une disposition de canalisation souterraine selon la revendication 9, dans laquelle les couplages du tuyau interne sont entourés par des soufflets rétractables (591 ; 890) qui se relient au tuyau externe de manière étanche aux fluides, les soufflets, lorsqu'ils sont rétractés, permettant un accès aux couplages (575 ; 875) et, lorsqu'ils sont déployés, définissant un volume annulaire de confinement clos autour des couplages.

11. Une disposition de canalisation souterraine selon la revendication 10, présentant des moyens pour appliquer un vide partiel à l'espace de confinement (827) entre les tuyaux interne et externe (782, 779) et un capteur pour détecter une perte de vide dans ledit espace de confinement (827).
